# EUROPÄISCHE PATENTANMELDUNG

(11) **EP 1 225 719 A2**
(43) Veröffentlichungstag der Anmeldung: **24.07.2002**
(21) Anmeldenummer: 02100034.4
(22) Anmeldetag: 18.01.2002
(51) Int. Cl.: H04L 1/18

(54) **Verfahren und Vorrichtung zur zuverlässigen Übertragung von Datenpaketen**

(30) Priorität: 19.01.2001 DE 10102323
(71) Anmelder: Philips Corporate Intellectual Property GmbH, 52066 Aachen (DE); Koninklijke Philips Electronics N.V., 5621 BA Eindhoven (NL)
(72) Erfinder: Vogtmeier, Gereon, 52066, Aachen (DE); Morales Serrano, Francisco, 52066, Aachen (DE); Schneider, Stefan, Aachen, 52066 (DE); Such, Olaf, Aachen, 52066 (DE)
(74) Vertreter: Volmer, Georg, Dipl.-Ing.

(57) **Zusammenfassung**

Die Erfindung betrifft ein Verfahren zur verlustfreien Übertragung von Datenpaketen von einem Sender (10) zu einem Empfänger (7). Die Sendeeinheit (5) des Senders übermittelt dabei fortlaufend über den Übertragungskanal (8) Datenpakete an den Empfänger (7) und legt gleichzeitig eine Kopie hiervon in einem Zwischenspeicher (3) ab. Der Empfänger (7) liefert ein Bestätigungssignal (9) über den Erfolg oder Misserfolg der Übermittlung der Datenpakete an den Sender (10) zurück. Wenn ein Datenpaket nicht erfolgreich übertragen worden ist, wird es von einer Steuereinheit (4) des Senders (10) aus dem Zwischenspeicher (3) entnommen und erneut in den Strom zu übertragender Datenpakete eingereiht. Erfolgreich übertragene Datenpakete werden dagegen aus dem Zwischenspeicher (3) gelöscht. Der Zwischenspeicher (3) ermöglicht den Rückgriff und das erneute Senden von Datenpaketen auch dann, wenn nicht nach jedem Sendevorgang auf das entsprechende Bestätigungssignal gewartet wird.

## Beschreibung

Die Erfindung betrifft ein Verfahren zur zuverlässigen Übertragung von Datenpaketen von einem Sender an einen Empfänger, wobei fehlerhaft übertragene Datenpakete erneut übermittelt werden. Ferner betrifft die Erfindung einen Sender, mit welchem das Verfahren durchgeführt werden kann.

Bei zahlreichen technischen Anwendungen müssen Daten von einem Sender zuverlässig, das heißt ohne Verlust an Informationen, an einen Empfänger übertragen werden. Ein Beispiel hierfür ist die Übertragung von Bildrohdaten vom Detektor eines bildgebenden Gerätes an eine Auswerteeinheit. Im Bereich der Medientechnik ist dies insbesondere für die rotierende Einheit (Disc) eines Computertomographen als Sender und den Stator des Tomographen als Empfänger der Fall. Gemäß dem Stand der Technik der Datenübertragung bei Computertomographen werden die zu übermittelnden Daten auf der Disc zunächst in einen FIFO (first in first out) Zwischenspeicher geschrieben, und anschließend wird jedes Datenpaket einzeln von der Disc über einen Schleifring zum Empfänger (Stator) gesendet. Der Empfänger schickt nach jedem Datenpaket ein Bestätigungssignal an den Sender auf der Disc zurück, welches eine Information darüber enthält, ob das Datenpaket erfolgreich gesendet und korrekt empfangen wurde oder nicht. Der Sender auf der Disc wartet den Eingang des Bestätigungssignals ab und sendet das nächste Datenpaket nur dann, wenn das Bestätigungssignal die erfolgreiche Übermittlung des vorangegangenen Datenpaketes signalisiert. Wird über das Bestätigungssignal dagegen eine fehlerhafte Übermittlung des Datenpaketes angezeigt, so sendet der Empfänger dieses Datenpaket ein zweites Mal. Durch Iteration des Verfahrens wird das Datenpaket dabei nötigenfalls mehrfach gesendet, bis es konekt beim Empfänger angekommen ist.

Das geschilderte Datenübertragungsverfahren stellt sicher, dass alle Informationen aus dem FIFO Speicher zuverlässig und ohne Verlust vom Sender zum Empfänger übertragen werden. Dies ist insbesondere bei Computertomographischen Anwendungen wichtig, um durch eine vollständige Ausnutzung der gewonnenen Informationen die Belastung des Patienten mit Röntgenstrahlen so gering wie möglich zu halten. Nachteilig bei dem Verfahren ist allerdings, dass die Datenübertragung vom Sender zum Empfänger die maximal mögliche Übertragungsrate der zwischengelegenen Übertragungsstrecke nicht ausnutzt, da der Empfänger nach jeder Übertragung eines Datenpaketes eine "Leerlaufzeit" für das Warten auf ein Bestätigungssignal verbringt, während welcher der Übertragungsweg nicht genutzt wird. Andererseits wäre jedoch angesichts der hohen anfallenden Datenmengen bei einem Computertomographen eine optimale Ausnutzung der Übertragungskapazitäten äußerst wünschenswert.

Vor diesem Hintergrund war es Aufgabe der vorliegenden Erfindung, eine Vorrichtung und ein Verfahren bereitzustellen, welche eine uwehässige und gleichzeitig schnelle Datenübertragung unter optimaler Ausnutzung des Übertragungskanals ermöglichen und daher insbesondere für die Übermittlung von Bildinformationen in einem Computertomographen geeignet sind.

Diese Aufgabe wird durch ein Verfahren mit den Merkmalen des Anspruchs 1 und einen Sender mit den Merkmalen des Anspruchs 5 gelöst. Vorteilhafte Ausgestaltungen sind in den Unteransprüchen enthalten.

Das Verfahren zur zuverlässigen, das heißt verlustfreien Übertragung von Datenpaketen von einem Sender an einen Empfänger enthält demgemäß die folgenden Schritte:
a) Fortlaufende Absendung von Datenpaketen vom Sender, wobei gleichzeitig eine Kopie eines jeden Datenpaketes in einem Zwischenspeicher abgelegt wird;
b) Rückübermittlung eines Bestätigungssignals vom Empfänger an den Sender, wobei das Bestätigungssignal den Erfolg oder Misserfolg der Übertragung von einem Datenpaket oder von mehreren Datenpaketen anzeigt;
c) Erneutes Absenden eines fehlerhaft übertragenen Datenpaketes durch den Sender, wobei dieses Datenpaket vom Sender aus dem Zwischenspeicher entnommen wird, und Löschen erfolgreich übertragener Datenpakete aus dem Zwischenspeicher.

Bei dem erfindungsgemäßen Verfahren werden somit fortlaufend Datenpakete vom Sender auf die Übertragungsstrecke gesendet, so dass diese Übertragungsstrecke optimal ausgenutzt wird Insbesondere wird nach Absenden eines ersten Datenpaketes unmittelbar das nächste Datenpaket gesendet, ohne dass erst auf den Eingang eines Bestätigungssignals betreffend das erste Datenpaket gewartet würde. Hierdurch werden Leerlaufzeiten, in denen der Übertragungskanal ungenutzt ist, vermieden. Damit dennoch eine vollständig korrekte Übertragung aller Daten sichergestellt werden kann, wird vor dem Senden eine Kopie eines jeden gesendeten Datenpaketes in einem Zwischenspeicher abgelegt. Die Kopie kann dann zu einem späteren Zeitpunkt bei Bedarf wieder abgerufen werden, um das entsprechende Datenpaket erneut zu senden, falls der erste Sendeversuch nicht erfolgreich gewesen sein sollte. Ein solches erneutes Senden eines nicht erfolgreich übermittelten Datenpaketes findet statt, wenn das dieses Datenpaket betreffende Bestätigungssignal des Empfängers einen Misserfolg der Sendung anzeigt. Dabei können, wie bereits erläutert wurde, zwischen dem zweiten Senden des Datenpaketes und seinem ersten Senden zahlreiche weitere Sendevorgänge von anderen Datenpaketen liegsn.

Wenn über das Bestätigungssignal des Empfängers dagegen angezeigt wird, dass ein bestimmtes Datenpaket erfolgreich übermittelt wurde, ist eine weitere Speicherung dieses Datenpaketes im Zwischenspeicher des Senders nicht mehr erforderlich Der Sender löscht daher nach Eingang eines solchen Bestätigungssignals das entsprechende Datenpaket aus dem Zwischenspeicher, so dass der Speicherplatz für die Aufnahme neuer Datenpakete wieder zur Verfügung steht.

Gemäß einer ersten Ausgestaltung des Verfahrens reagiert der Sender unmittelbar (nach Abschluss des aktuellen Arbeitstaktes) auf den Eingang eines Bestätigungssignals. Das heißt, dass die in dem Bestätigungssignal als erfolgreich gesendet mitgeteilten Datenpakete aus dem Zwischenspeicher gelöscht werden, während die in dem Bestätigungssignal als nicht erfolgreich gesendet mitgeteilten Datenpakete aus dem Zwischenspeicher abgerufen und in den Strom der zu übertragenden Datenpakete eingeflochten werden. Typischerweise besteht ein Bestätigungssignal des Senders aus einer Information über Erfolg oder Misserfolg der Übertragung eines einzigen Datenpaketes, so dass hierauf mit einem Löschen des Datenpaketes aus dem Zwischenspeicher oder mit einem erneuten Senden des Datenpaketes zu reagieren ist.
Gemäß einer Weiterbildung des Verfahrens hält der Sender dann, wenn der Zwischenspeicher für gesendete Datenpakete vollständig belegt ist, die fortlaufende Übertragung von Datenpaketen so lange an, bis ein Bestätigungssignal eintrifft, das die erfolgreiche Übermittlung eines Datenpaketes anzeigt. Nach Eingang eines solchen Bestätigungssignals kann der Sender nämlich das betreffende Datenpaket aus dem Zwischenspeicher löschen, so dass Speicherplatz frei wird. Anschließend kann demgemäß ein neues Datenpaket gesendet und seine Kopie im Zwischenspeicher abgelegt werden. Durch das Anhalten der Übertragung bei Erreichen der Füllgrenze des Zwischenspeichers wird sichergestellt, dass von allen gesendeten und noch nicht als erfolgreich übermittelt bestätigten Datenpaketen eine Kopie beim Sender vorhanden ist. Ein Verlust an Informationen ist daher auch bei Erreichen der Grenze des Zwischenspeichers ausgeschlossen. In Abwandlung des geschilderten Vorgehens können bei Erreichen der Füllgrenze des Zwischenspeichers auch zyklisch nur noch Datenpakete aus dem Zwischenspeicher übertragen werden, da dies den Füllstand des Zwischenspeichers unverändert lässt. In diesem Falle wird also nur die fortlaufende Übertragung von neuen ("frischen") Datenpaketen angehalten.

Gemäß einer anderen Ausgestaltung des Verfahrens sammelt der Sender eingehende Bestätigungssignale vom Empfänger und bearbeitet diese zu Zeitpunkten, die vom Füllgrad des Zwischenspeichers abhängen. Wenn der Zwischenspeicher in einem verhältnisnäßig geringen Umfang mit Datenpaketen belegt ist, kann der Sender somit die fortlaufende Übertragung von Datenpaketen unter Ablegung von Kopien im Zwischenspeicher noch fortsetzen. Wenn der Füllstand des Zwischenspeichers dagegen eine obere Grenze überschreitet oder der Zwischenspeicher sogar vollständig gefüllt ist, schaltet der Sender auf die Ababeitung von angesammelten Bestätigungssignalen um. Bestätigungssignale über erfolgreiche Übermittlungen von Datenpaketen erlauben dabei das Löschen der entsprechenden Datenpakete aus dem Zwischenspeicher, so dass hierin wieder freier Speicherplatz gewonnen wird.

Die Erfindung betrifft ferner einen Sender zur zuverlässigen, das heißt verlustfreien Übertragung von Datenpaketen an einen Empfänger, welcher insbesondere zur Durchführung des oben erläuterten Verfahrens geeignet ist. Der Sender enthält die folgenden Elemente:
a) einen Eingang für zu übertragende Datenpakete;
b) eine Sendeeinheit zum Absenden von Datenpaketen auf eine Übertragungsstrecke zu einem Empfänger;
c) einen Zwischenspeicher zur Ablage von Kopien der auf die Übertragungsstrecke gesendeten Datenpakete;
d) eine Empfangseinheit zum Empfang von Bestätigungsaignalen des Empfängers, wobei die Bestätigungssignale den Erfolg oder den Misserfolg der Übertragung von Datenpaketen signalisieren;
e) eine Steuereinheit, welche die Weiterleitung von Datenpaketen vom Eingang und vom Zwischenspeicher an die Sendeeinheit steuert und dabei nicht erfolgreich übertragene Datenpakete erneut der Sendeeinheit zuführt und erfolgreich übertragene Datenpakete aus dem Zwischenspeicher löscht.

Der Sender kann bei Verwendung mit einem entsprechend eingerichteten Empfänger, welcher Bestätigungssignale über den Erfolg beziehungsweise Misserfolg einer Datenpaketübertragung an den Sender zurücksendet, eingesetzt werden. Entsprechend dem oben erläuterten Verfahren kann dabei eine fortlaufende Absendung von Datenpaketen auf die Übertragungsstrecke stattfinden, ohne dass erst nach jedem Datenpaket der Eingang des zugehörigen Bestätigungssignals abgewartet werden muss. Der Verlust von Informationen wird dadurch vermieden, dass in dem Zwischenspeicher Kopien aller gesendeten und noch nicht als erfolgreich zugegangen bestätigten Datenpakete abgelegt sind Die Steuereinheit kann auf diesen Zwischenspeicher zugreifen, um nötigenfalls ein nicht erfolgreich gesendetes Datenpaket erneut der Sendeeinheit für einen zweiten oder allgemein n-ten Sendeversuch zuzuführen. Datenpakete, deren erfolgreiche Übermittlung bestätigt wird, werden dagegen von der Steuereinheit aus dem Zwischenspeicher dauerhaft gelöscht, um dort Platz für weitere Kopien gesendeter Datenpakete zu schaffen.

Vorzugsweise weist der Eingang des Senders einen Zwischenspeicher für zu übertragende Datenpakete auf. Bei dem Zwischenspeicher kann es sich insbesondere um einen FIFO Speicher handeln. Dieser Zwischenspeicher erlaubt eine Abstimmung unterschiedlicher Datenübertragungsraten von der eigentlichen Datenquelle, zum Beispiel der bildgebenden Einheit eines Computertomographen, und des Senders selbst. Typischerweise werden diese Übertragungsraten ungleich beirehungenerse die Übertragungen asynchron sein, so dass der Zwischenspeicher als Puffer für einlaufende Datenpakete dient. Ein solcher Zwischenspeicher ist in der Regel auch bei bekannten Sendern vorhanden. Er ist dort sehr groß auszulegen, damit während der Wartezeit auf ein Bestätigungssignal und insbesondere bei mehrfachen erfolglosen Sendeversuchen nacheinander, während der kein Abfluss von Datenpaketen aus dem FIFO erfolgt, keine eingehenden Daten verlorengehen. Eine solche Blockierungssituation kann bei dem erfindungsgemäßen Sender nicht auftreten, da er fortlaufend Datenpakete übermittelt. Daher kann der Zwischenspeicher des Eingangs entsprechend kleiner dimensioniert werden.

Gemäß einer anderen Weiterbildung des Senders ist im Datenübertragungsweg vor der Sendeeinheit ein Zwischenspeicher für zu sendende Datenpakete angeordnet. Auch dieser Zwischenspeicher kann ein FIFO Speicher sein und dient insbesondere dazu, verschiedene Datenübertragungsraten aneinander anzugleichen.

Vorzugsweise ist der Sender in der rotierenden Bildaufnahmeeinheit (Disc) eines Computertomographen und der Empfänger im zugehörigen feststehenden Stator des Computertomographen angeordnet. Wie oben bereits erläutert wurde, ist gerade bei der Übertragungsstrecke zwischen einer Disc und einem Stator eine Situation gegeben, in der hohe Datenmengen schnell und möglichst vollständig fehlerfrei über eine sehr fehleranfällige Übertragungsstrecke übermittelt werden müssen. Die Vorteile des Senders kommen daher in diesem Falle besonders zum Tragen.

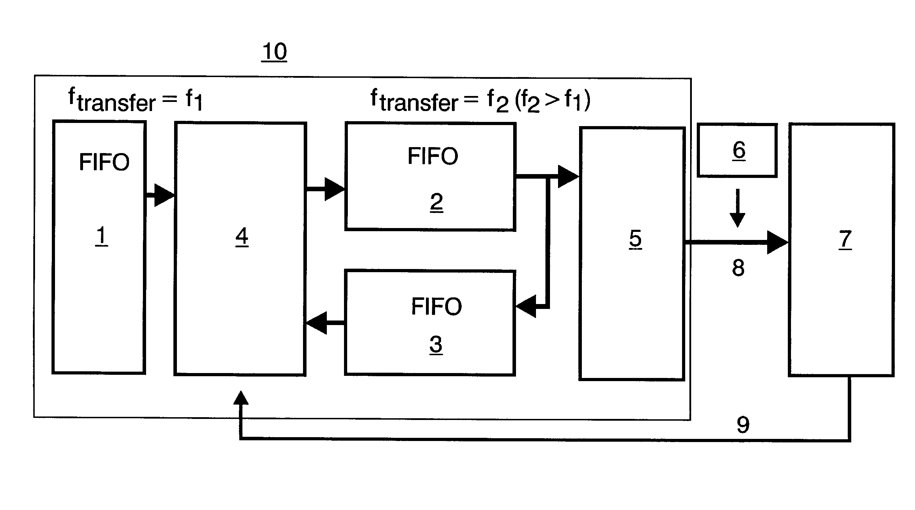

Im Folgenden wird die Erfindung mit Hilfe der Figur beispielhaft erläutert. Die einzige Figur zeigt in einem Blockdiagramm die Komponenten eines erfindungsgemäßen Senders, der Daten über einen fehleranfälligen Übertragungsweg an einen Empfänger sendet.

Der in der Figur dargestellte Sender 10 kann insbesondere in der rotierenden Einheit (Disc) eines Computertomographen angeordnet sein, während der zugehörige Empfänger 7 durch die Auswerteeinheit des Stators gebildet wird. Der Übertragungsweg 8 für Daten vom Sender 10 zum Empfänger 7 geht über den Schleifring zwischen Disc und Stator. Aus technischen Gründen ist dieser Übertragungsweg verhältnismäßig fehleranfällig, was in der Figur durch die Fehlerquelle 6 angedeutet ist.

Die hohen Datenraten, mit der die Daten von hochauflösenden Detektoren zur Auswerteeinheit transportiert werden müssen, werfen insbesondere dann ein Problem auf, wenn wie bei medizinischen Computertomographischen Anwendungen kein Verlust und keine Verfälschung der Datenpakete während der Übertragung akzeptabel ist. Bei herkömmlichen Übertragungskonzepten werden die eingehenden Daten zunächst in einem FIFO Speicher 1 am Eingang zwischengespeichert und dann über einen weiteren FIFO Speicher 2 der Sendeeinheit 5 zugeleitet, von der sie auf den Übertragungsweg 8 abgesendet werden. Herkömmliche Sender warten dann mit der nächsten Übertragung eines Datenpaketes so lange, bis vom Empfänger 7 ein Bestätigungssignal 9 zurück übermittelt wurde. Wenn dieses Bestätigungssignal die erfolgreiche Übermittlung des Datenpaketes anzeigt, wird das nächste Datenpaket aus dem FIFO 1 entnommen und von der Sendeeinheit 5 abgesendet. Wurde dagegen das vorige Datenpaket nicht korrekt übertragen, so wird seine Kopie bei herkömmlichen Konzepten dem FIFO Speicher 2 noch einmal entnommen und erneut gesendet. Während der Wartezeit auf das Bestätigungssignal findet dabei keine Übertragung im Übertragungsweg 8 statt, so dass dieser häufig ungenutzt ist. Der Verlust an Übertragungskapazität ist insbesondere dann hoch, wenn die Antwortzeiten von dem Empfänger 7 relativ groß sind Ferner tritt ein Problem auf, wenn ein bestimmtes Datenpaket mehrfach hintereinander nicht erfolgreich gesendet werden kann und sich die nachfolgenden Datenpakete daher im FIFO 1 anstauen. Im schlimmsten Fall kann bei Überlauf des FIFO 1 dann ein Datenverlust eintreten.

Um die Kapazität des Übertragungsweges 8 besser zu nutzen, ist der erfindungsgemäße Sender mit einem FIFO Zwischenspeicher 3 und mit einer in bestimmter Weise eingerichteten Steuereinheit 4 ausgestattet. Jedes von der Sendeeinheit 5 abgesendete Datenpaket wird dabei vor dem Senden in Kopie in dem Zwischenspeicher 3 abgelegt. Unmittelbar nach Absenden des Datenpaketes wird das nächste im Zwischenspeicher 2 anliegende Datenpaket von dort entnommen, eine Kopie hiervon im Zwischenspeicher 3 abgelegt, und das Datenpaket von der Sendeeinheit 5 abgesendet. Es wird somit nicht auf den Eingang eines Bestätigungssignals 9 für das erste Datenpaket gewartet, sondern es findet ein kontinuierlicher Datentransfer zum Empfänger 7 statt. Die Übertragungsstrecke 8 wird daher bestmöglich ausgenutzt.

Wenn ein vom Empfänger 7 kommendes Bestätigungssignal 9 dem Sender 10 anzeigt, dass ein Datenpaket fehlerhaft, unvollständig oder überhaupt nicht übermittelt wurde, so entnimmt die Steuereinheit 4 dieses Datenpaket dem Zwischenspeicher 3 und leitet es erneut dem Zwischenspeicher FIFO 2 zu, damit es ein zweites Mal vom Sender 5 gesendet werden kann. Bei der Entnahme kann das Datenpaket im Zwischenspeicher 3 gelöscht werden, da es gemäß der üblichen Routine beim nächsten Sendeversuch erneut als Kopie im Zwischenspeicher 3 abgelegt wird. Im Falle eines Transferfehlers wird somit das fehlerhaft übertragene Datenpaket aus dem Zwischenspeicher 3 wieder in den kontinuierlichen Datenstiom eingespeist.

Datenpakete, bei denen das zugehörige Bestätigungssignal 9 anzeigt, dass sie korrekt übertragen wurden, können dauerhaft aus dem Zwischenspeicher 3 gelöscht werden. Auf diese Weise wird im Zwischenspeicher ständig wieder Platz für die Ablage neuer Kopien von Datenpaketen geschaffen.

Die Übertragungskapazität des Übertragungsweges 8 ist etwas größer auszulegen als es der Datenrate f₁ am Eingang 1 entspricht. Dies hat seinen Grund darin, dass die Übertragungsstrecke 8 durch das mehrfache Senden fehlerhafter Datenpakete eine etwas höhere Belastung f₂ > f₁ hat. Die Größe dieser zusätzlich benötigen Kapazität des Übertragungsweges 8 hängt unmittelbar mit seiner Störanfälligkeit zusammen, da diese wiederum die Häufigkeit bestimmt, mit welcher Datenpakete mehrfach zu senden sind.

Gegenüber herkömmlichen Sendern kann die Größe der Zwischenspeicher reduziert werden, da diese jetzt nur noch von der Datenrate und der Antwortzeit für die Bestätigungssignale 9 abhängt, jedoch im Wesentlichen unabhängig von der Fehlerrate auf der Übertragungsstrecke 8 ist.
Mit dem in der Figur dargestellten Sender- /Empfängerpaar lassen sich somit eine Reihe von Vorteilen verwirklichen:
- die Datenrate auf der Übertragungsstrecke 8 ist unabhängig von der Antwortzeit für die Bestätigungssignale 9;
- ein höherer effektiver Datendurchsatz ist erreichbar;
- es entsteht kein Datenrückstau bei Mehrfach-Übertragungsfehlern;
- insgesamt geringerer Speicherbedarf für Zwischenspeicher (dimensionierbar aus Antwortzeit und maximaler Transferrate);
- höhere Datentransferrate bei gleicher Übertragungssicherheit;
- Kostenersparnis durch kleineren, definierten Zwischenspeicher.

Während vorliegend das Beispiel einer Übertragung von bildgebenden Daten in der Computertomographie in den Vordergrund gestellt wurde, ist die Anwendung des erfindungsgemäßen Konzeptes hierauf nicht beschränkt. Anwendungsgebiete sind vielmehr alle Fälle mit hohen Datentransferraten und 100%-iger Übertragungssicherheit (durch Rückmeldung) bei gleichzeitig begrenzter beziehungsweise zu minimierender Übertragungszeit (zum Beispiel Hochgeschwindigkeits-Download mit Bestätigungs-Datenupload geringerer Geschwindigkeit).

## Patentansprüche

1. Verfahren zur zuverlässigen Übertragung von Datenpaketen von einem Sender (10) an einen Empfänger (7), vorzugsweise zur Übertragung der Datenpakete von der rotierenden Bildaufnahmeeinheit eines Computertomographen zum feststehenden Stator, wobei
a) der Sender Datenpakete fortlaufend absendet und gleichzeitig eine Kopie von ihnen in einem Zwischenspeicher (3) ablegt;
b) der Empfänger dem Sender den Erfolg oder Misserfolg der Übertragung von Datenpaketen mit einem Bestätigungssignal (9) signalisiert;
c) der Sender ein fehlerhaft übertragenes Datenpaket aus dem Zwischenspeicher (3) erneut absendet, während er erfolgreich übertragene Datenpakete aus dem Zwischenspeicher löscht.

2. Verfahren nach Anspruch 1,
**dadurch gekennzeichnet,**
**dass** der Sender (10) unmittelbar nach Erhalt eines Bestätigungssignals (9) die davon betroffenen Datenpakete erneut absendet beziehungsweise sie löscht.

3. Verfahren nach Anspruch 1 oder 2,
**dadurch gekennzeichnet,**
**dass** der Sender (10) die fortlaufende Übertragung von Datenpaketen bis zum Eintreffen von Bestätigungssignalen (9) über erfolgreich übermittelte Datenpakete anhält, falls der Zwischenspeicher (3) voll ist.

4. Verfahren nach mindestens einem der Ansprüche 1 bis 3,
**dadurch gekennzeichnet,**
**dass** der Sender (10) Bestätigungssignale (9) sammelt und sie in Abhängigkeit vom Füllgrad des Zwischenspeichers (3) bearbeitet.

5. Sender (10) zur zuverlässigen Übertragung von Datenpaketen an einen Empfänger (7), enthaltend
a) einen Eingang (1) für zu übertragende Datenpakete,
b) eine Sendeeinheit (5) zum Absenden von Datenpaketen auf eine Übertragungsstrecke (8),
c) einen Zwischenspeicher (3) zur Ablage von Kopien der abgesendeten Datenpakete,
d) eine Empfangseinheit (4) zum Empfang von Bestätigungssignalen (9) des Empfängen, die den Erfolg oder Misserfolg der Übertragung von Datenpaketen signalisieren,
e) eine Steuereinheit (4), welche die Weiterleitung von Datenpaketen vom Eingang (1) und vom Zwischenspeicher (3) an die Sendeeinheit (5) steuert, nicht erfolgreich übertragene Datenpakete erneut der Sendeeinheit zuführt und erfolgreich übertragene Datenpakete aus dem Zwischenspeicher löscht.

6. Sender nach Anspruch 5,
**dadurch gekennzeichnet,**
**dass** der Eingang einen Zwischenspeicher (1) für zu übertragende Datenpakete aufweist.

7. Sender nach Anspruch 5 oder 6,
**dadurch gekennzeichnet,**
**dass** vor der Sendeeinheit (5) ein Zwischenspeicher (2) für zu sendende Datenpakete angeordnet ist.

8. Sender nach mindestens einem der Ansprüche 5 bis 7,
**dadurch gekennzeichnet,**
**dass** der Sender (10) in der rotierenden Bildaufnahmeeinhdt eines Computertomographen und der Empfänger (7) im zugehörigen feststehenden Stator angeordnet ist.

9. Computertomograph mit einem Sender (10) und einem Empfänger (7),
- wobei der Sender dazu vorgesehen ist, Datenpakete fortlaufend abzusenden und gleichseitig eine Kopie von ihnen in einem Zwischenspeicher abzulegen,
- wobei der Empfänger dazu vorgehen ist, dem Sender den Erfolg oder Misserfolg der Übertragung von Datenpaketen mit einem Bestätigungssignal (9) zu signalisieren,
- wobei der Sender dazu vorgesehen ist, ein fehlerhaft übertragenes Datenpaket aus dem Zwischenspeicher (3) erneut abzusenden, während er erfolgreich übertragene Datenpakete aus dem Zwischenspeicher löscht.

10. Computertomograph mit einem Sender (10) und einem Empfänger (7), wobei der Sender aufweist
a) einen Eingang (1) für zu übertragende Datenpakete,
b) eine Sendeeinheit (5) zum Absenden von Datenpaketen auf eine Übertragungsstrecke (8),
c) einen Zwischenspeicher (3) zur Ablage von Kopien der abgesendeten Datenpakete,
d) eine Empfangseinheit (4) zum Empfang von Bestätigungssignalen (9) des Empfängers, die den Erfolg oder Misserfolg der Übertragung von Datenpaketen signalisieren,
e) eine Steuereinheit (4), welche die Weiterleitung von Datenpaketen vom Eingang (1) und vom Zwischenspeicher (3) an die Sendeeinheit (5) steuert, nicht erfolgreich übertragene Datenpakete erneut der Sendeeinheit zuführt und erfolgreich übertragene Datenpakete aus dem Zwischenspeicher löscht.
